# EUROPÄISCHE PATENTANMELDUNG

(11) **EP 1 500 576 A2**
(43) Veröffentlichungstag der Anmeldung: **26.01.2005**
(21) Anmeldenummer: 04016875.9
(22) Anmeldetag: 16.07.2004
(51) Int. Cl.: B62D 25/06

(54) **Deckenanordnung für Grossraumfahrzeug**

(30) Priorität: 22.07.2003 DE 10333179
(71) Anmelder: DaimlerChrysler AG, 70567 Stuttgart (DE)
(72) Erfinder: Bodirsky, Helmut, 89233 Neu-Ulm (DE)

(57) **Zusammenfassung**

Die Erfindung betrifft eine Deckenanordnung für ein Großraumfahrzeug, insbesondere für einen Omnibus, mit einem sich in Fahrzeuglängsrichtung in einem Eckbereich erstreckenden Luftkanal (2), der durch eine Reihe von Stützen (10) an der Tragstruktur des Großraumfahrzeugs gehalten ist. Die Stützen (10) sind innerhalb des Luftkanals (2) angeordnet. Aufgabe ist, die Strömung innerhalb des Luftkanals (2) zu verbessern und dabei die konstruktive Freizügigkeit bei gattungsgemäßen Deckenanordnungen zu erhöhen. Erfindungsgemäß sind die Stützen dazu als Strangpressprofil ausgebildet, die jeweils an einer oberen und einer seitlichen Anbindungsstelle (11,12) an die Tragstruktur angeschlossen sind.

## Beschreibung

Die Erfindung betrifft eine Deckenanordnung für ein Großraumfahrzeug gemäß dem Oberbegriff des Patentanspruchs 1.

In Großraumfahrzeugen, beispielsweise in Omnibussen, ist es üblich, oberhalb der Sitzreihen in Fahrzeuglängsrichtung in einem Eckbereich der Deckenanordnung einen Luftkanal anzuordnen, der über Luftausgangsöffnungen die Insassen mit Frischluft versorgt.

Aus der DE 198 31 880 Cl ist eine derartige Deckenanordnung für Omnibusse bekannt, die einen Luftkanal umfasst, der sich in Fahrzeuglängsrichtung in einem Eckbereich erstreckt. Der Luftkanal wird durch eine Reihe von Stützen an der Tragstruktur des Omnibusses gehalten, wobei die Stützen innerhalb des Luftkanals angeordnet sind. Dadurch ist es erforderlich, dass die Luftkanalstütze einen geringen Strömungswiderstand aufweist. In der DE 198 31 880 C1 ist dieses Problem dadurch gelöst, indem die Luftkanalstütze unmittelbar unterhalb der Außenhaut des Omnibusses angeordnet ist und der Luftkanal einen entsprechend großen Querschnitt aufweist.

Die Aufgabe der Erfindung besteht darin, die Strömung innerhalb des Luftkanals zu verbessern und dabei die konstruktive Freizügigkeit bei gattungsgemäßen Deckenanordnungen zu erhöhen.

Diese Aufgabe wird erfindungsgemäß durch die Merkmale des Patentanspruchs 1 gelöst.

Erfindungsgemäß sind die den Luftkanal haltenden Stützen als Strangpressprofile ausgebildet, die jeweils an einer Anbindungsstelle an die Tragstruktur eines Omnibusses angeschlossen sind. Dabei ist es unerheblich, ob die Anbindung an einer Anbindungsstelle im Dachbereich oder im Seitenbereiche des Omnibusses erfolgt. Die Ausbildung der Stützen als Strangpressprofil ermöglicht einen offenen Querschnitt der Stützen, der die Strömung innerhalb des Luftkanals nur geringfügig beeinträchtigt. Trotz des offenen Querschnitts kann die Stütze unter Reduzierung des Gewichts ausreichend biegesteif ausgebildet werden. Neben der Gewichtsersparnis lassen sich durch das Strangpressprofil Anlageflächen herstellen, die keine Entformungsschrägen aufweisen, so dass ein präziser Zusammenbau ermöglicht wird.

Gemäß einer bevorzugten Ausführungsform weist die Stütze einen im Wesentlichen L-förmigen Querschnitt auf, der dem Luftkanal eine höhere Stabilität verleiht. Wahlweise kann der Querschnitt auch U-förmig mit entsprechenden Anbindungsstellen ausgebildet sein.

Als besonders stabil haben sich Stützen erwiesen, die einen Obergurt und einen Untergurt aufweisen, die zueinander beabstandet und über Stützstreben miteinander verbunden sind.

Dies lässt sich noch verbessern, wenn die Stützstreben die Stütze zickzackförmig durchsetzen.

Eine besonders einfache Montage wird ermöglicht, wenn in die Stütze Befestigungsnuten eingelassen sind, die sich in Längsrichtung der Stütze erstrecken. An diese Befestigungsnuten können beispielsweise Luftkanalprofile geschraubt werden, unabhängig davon, an welcher Position innerhalb der Deckenanordnung sich die Luftkanalstütze befindet.

Ein optimaler Toleranzausgleich beim Einbau der Stütze in die Deckenanordnung kann erreicht werden, wenn die Stütze an ihrer oberen Anbindungsstelle über einen Gleitstein an einer Führungsnut gehalten ist. Gleichzeitig kann sich die Stütze mit ihrer seitlichen Anbindungsstelle an einer Spante der Tragstruktur des Omnibusses abstützen.

Klappergeräusche können vermieden werden, wenn zwischen der Spante und der seitlichen Anbindungsstelle der Stütze ein Luftkanalprofil angeordnet ist, an dem die Luftkanalstütze teilweise anliegt.

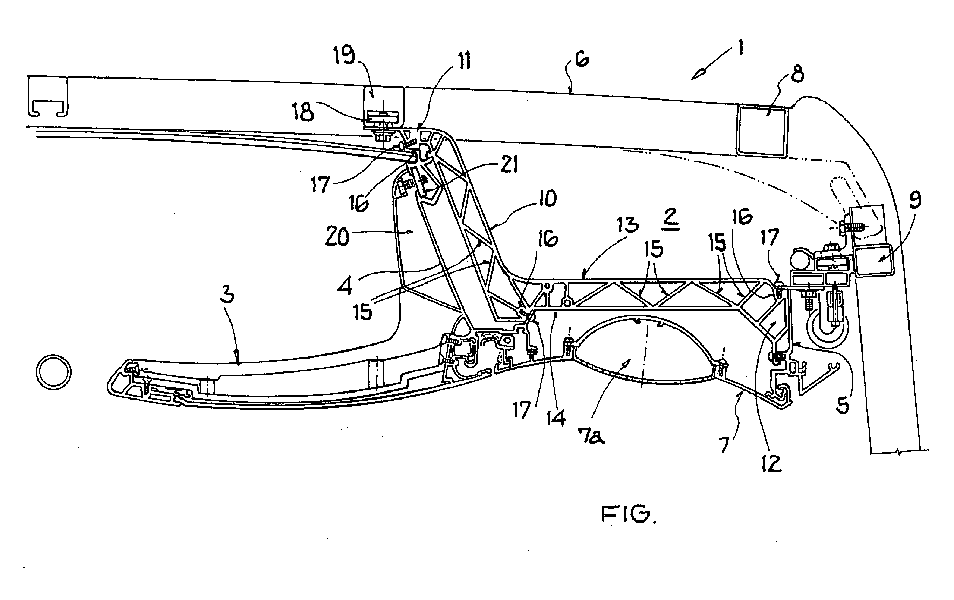

Ein bevorzugtes Ausführungsbeispiel zu einer erfindungsgemäßen Deckenanordnung zeigt die einzige Figur.

Die Figur zeigt einen Querschnitt durch eine Deckenanordnung 1 eines nicht weiter dargestellten Omnibusses. Die Deckenanordnung 1 umfasst einen Luftkanal 2 und eine Gepäckablage 3.

Der Luftkanal 2 wird seitlich von zwei Luftkanalprofilen 4 und 5, oben von einer Dachschale 6 sowie unten von einem Bodenprofil 7 begrenzt. In dem Bodenprofil 7 sind Bedieneinheiten 7a mit Beleuchtungseinheiten untergebracht.

Die Dachschale 6 wird von zur Tragstruktur gehörenden Spanten 8 und 9 getragen. Innerhalb des Luftkanals 2 sind eine Reihe von Luftkanalstützen 10 angeordnet, die den Luftkanal 2 halten.

Jede Luftkanalstütze 10 ist als Strangpressprofil ausgebildet und ist in diesem Ausführungsbeispiel ca. 60 mm breit. Der Abstand zwischen den Luftkanalstützen 10 beträgt etwa 1000 mm.

Die Luftkanalstütze 10 weist einen im Wesentlichen L-förmigen Querschnitt auf, wobei ein freies Ende die obere Anbindungsstelle 11 und ein anderes freies Ende die seitliche Anbindungsstelle 12 bildet. Die Luftkanalstütze 10 weist einen Obergurt 13 und einen Untergurt 14 auf, die zueinander beabstandet und über Stützstreben 15 miteinander verbunden sind. Die Stützstreben 15 sind innerhalb der Luftkanalstütze 10 zickzackförmig angeordnet und bilden somit eine stabile Tragstruktur. Sowohl in den Obergurt 13 als auch in die Untergurt 14 sind Befestigungsnuten 16 eingelassen. Der Querschnitt der Befestigungsnuten 16 in an die Abmaße der Gewinde von Befestigungsschrauben 17 angepasst, mittels derer die Luftkanalprofile 4 bzw. 5 an der Luftkanalstütze 10 verschraubt werden. Damit kann eine toleranzgenaue Ausrichtung der Luftkanalprofile 4 bzw. 5 in Fahrzeuglängsrichtung bei der Montage erfolgen.

Zwischen der seitlichen Anbindungsstelle 12 und der Spante 9 der Tragstruktur erstreckt sich das Luftkanalprofil 5, an dem die Luftkanalstütze 10 anliegt.

Bei der Montage der Luftkanalstütze 10 wird die obere Anbindungsstelle 11 über einen Gleitstein 18 in einer Führungsnut 19 eingehängt und kann damit in Fahrzeuglängsrichtung verschoben werden, bis die seitliche Anbindungsstelle 12 fest mit der Spante 9 der Tragstruktur verbunden ist. Die Montage gestaltet sich dadurch denkbar einfach.

Die Gepäckablage 3 umfasst Gepäckablagestützen 20, die mit dem Luftkanalprofil 4 über Gleitsteine 21 verbunden sind. Die weitere Ausgestaltung der Gepäckablage 3 ist für die Erfindung nicht wesentlich und kann daher beliebig ausgeführt sein.

## Patentansprüche

1. Deckenanordnung für ein Großraumfahrzeug, insbesondere einen Omnibus, mit einem sich in Fahrzeuglängsrichtung in einem Eckbereich erstreckenden Luftkanal, der durch eine Reihe von Stützen an der Tragstruktur des Großraumfahrzeugs gehalten ist, wobei die Stützen innerhalb des Luftkanals angeordnet sind,
**dadurch gekennzeichnet,**
**dass** die Stützen (10) als Strangpressprofil ausgebildet sind, die zumindest an einer Anbindungsstelle (11, 12) an die Tragstruktur angeschlossen sind.

2. Deckenanordnung nach Anspruch 1,
**dadurch gekennzeichnet,**
**dass** die Stütze (10) einen im Wesentlichen L-förmigen Querschnitt aufweist.

3. Deckenanordnung nach Anspruch 1 oder 2,
**dadurch gekennzeichnet,**
**dass** jede Stütze (10) einen Obergurt (13) und eine Untergurt (14) aufweist, die zueinander beabstandet und über Stützstreben (15) miteinander verbunden sind.

4. Deckenanordnung nach Anspruch 3,
**dadurch gekennzeichnet,**
**dass** die Stützstreben (15) die Stütze (10) zickzackförmig durchsetzen.

5. Deckenanordnung nach einem der Ansprüche 1 bis 4,
**dadurch gekennzeichnet,**
**dass** in die Stütze (10) Befestigungsnuten (16) eingelassen sind, die sich in Längsrichtung der Stütze (10) erstrecken.

6. Deckenanordnung nach einem der Ansprüche 1 bis 5,
**dadurch gekennzeichnet,**
**dass** die Stütze (10) an ihrer oberen Anbindungsstelle (11) über einen Gleitstein (18) an einer Führungsnut (19) gehalten ist.

7. Deckenanordnung nach einem der Ansprüche 1 bis 6,
**dadurch gekennzeichnet,**
**dass** sich die Stütze (10) an ihrer seitlichen Anbindungsstelle (12) an einer Spante (9) der Tragstruktur abstützt.

8. Deckenanordnung nach Anspruch 7,
**dadurch gekennzeichnet,**
**dass** zwischen der Spante (9) und der seitlichen Anbindungsstelle (12) der Stütze (10) ein Luftkanalprofil (5) angeordnet ist, an dem die Stütze (10) teilweise anliegt.
